# EUROPEAN PATENT APPLICATION

(11) **EP 4 000 417 A1**
(43) Date of publication of application: **25.05.2022**
(21) Application number: 20209248.2
(22) Date of filing: 23.11.2020
(51) Int. Cl.: A23L 27/00, A23C 9/12, A23C 9/123, A23C 9/127, A23C 9/13, A23L 29/00, A23L 29/269

(54) **COMBINATION OF LACTASE AND A YEAST CELL WALL DERIVED TASTE MODULATOR**

(71) Applicant: DSM IP Assets B.V., 6411 TE Heerlen (NL)
(72) Inventor: DEKKER, Petrus Jacobus Theodorus, 6100 AA Echt (NL)
(74) Representative: DSM Intellectual Property

(57) **Abstract**

The present invention relates to the food field. The invention provides a granulate composition comprising a lactase and a yeast cell wall derived taste modulator.

## Description

### Field

The present invention relates to the food field.

### Background

Dairy products such as flavoured milk products of flavoured yoghurt are often provided with added sugar in order to provide a flavoured dairy product having a sweetened flavour. However, besides providing a sweetened flavour, the added sugar also improves the texture and sensory attributes such as mouthfeel thickness and creaminess of the flavoured dairy product. Especially in countries where plain yogurt is perceived as acidic, added sugar amounts of 7 to 15 % (wt) to sweeten the product are reported. Examples of these flavoured dairy products having added sugar are fruit or vanilla yogurts.

In view of health concerns related to the consumption of sugar, there have been several research efforts for sugar substitutes, such as the use of sweeteners. However, a problem with sweeteners is that they do not provide the texturizing properties of sugar and may introduce off flavours to the yogurt.

Simply reducing the amount of added sugar negatively influences the texture and sensory attributes such as mouthfeel thickness and creaminess of a dairy product. This is considered as a disadvantage since texture and sensory attributes such as mouthfeel thickness and creaminess are important market characteristics for dairy products.

Therefore, there is a need in the art for a flavoured dairy product having a reduced amount of added sugar while maintaining the texture and sensory attributes of a flavoured dairy product.

### Summary

Disclosed herein are:
- A granulate composition comprising a lactase and a yeast cell wall derived taste modulator.
- A granulate composition comprising a lactase and a yeast cell wall derived taste modulator, further comprising a high intensity sweetener, preferably a steviol glycoside, more preferably Reb M.
- A method for preparing a granulate composition as claimed herein, said method comprising mixing
   i. spray dried lactase and spray dried yeast cell wall derived taste modulator, or
   ii. spray dried lactase and spray dried yeast cell wall derived taste modulator and a sweetener, preferably a steviol glycoside, or
   iii. spray dried lactase and spray dried yeast cell wall derived taste modulator and Reb M.
- A method for preparing a dairy product, said method comprising
   - adding a composition as disclosed herein to a lactose comprising milk-based substrate,
   - allowing the lactase to at least partly hydrolyze the lactose.
- A method for preparing a fermented dairy product, said method comprising
   - adding a composition as disclosed herein to a lactose comprising milk-based substrate,
   - allowing the lactase to at least partly hydrolyze the lactose,
   - said method further comprises adding lactic acid bacteria to the milk-based substrate and allowing fermentation to take place.
- Use of a composition as disclosed herein for increasing the fullness/body of a dairy product.

Surprisingly, a granulate composition as disclosed herein is able to increase the fullness/body of a dairy product.

### Detailed description

In a first aspect the present disclosure provides a granulate composition comprising a lactase and a yeast cell wall derived taste modulator. Alternatively worded, the present disclosure provides a granulate composition comprising a granulated lactase and a yeast cell wall derived taste modulator. In yet another alternative wording the present disclosure provides a granulate composition comprising lactase granulates and a yeast cell wall derived taste modulator.

A granulate composition is defined herein as a composition which typically consists of, amongst others, micro granulates which micro granulates may flow freely when shaken or tilted. A granulate composition may also comprise powder particles which are smaller in size when compared to the size of the micro granulate particles. The granulate composition comprises a (granulated) lactase (alternatively: lactase granulates) and is therefore also referred to as a lactase granulate composition which further comprises a yeast cell wall derived taste modulator.

A (lactase) granulate composition as disclosed herein is a (lactase) granulate composition wherein from 60% to 95%, for instance from 60% to 97%, from 70% to 98%, from 80% to 99%, or from 90% to 100% of the lactase granulates in said granulate composition have a particle size distribution (PSD) of from 100 to 1000 µm. Preferably, over 50% of the lactase granulates in said granulate composition have a particle size in the range of 180 to 250 µm. Particle size is determined using to sieve analysis, preferaly sieve analysis according to the standardized method NPR 2244.

The yeast cell wall derived taste modulator as present in the granulate composition is typically in the form of an agglomerated powder but can also be in the form of a granulate. Just as for the lactase granulates, the particle size of the agglomerated powder of the yeast cell wall derived taste modulator may differ a bit from batch to batch. In a typical, non-limiting example, the mean particle size distribution of the agglomerate powder of the yeast cell wall derived taste modulator is 134 µm and the median particle size distribution is 98 µm.

The lactase particles and the yeast cell wall derived taste modulator particles may have somewhat different sizes and hence segregation of said particles may occur.

Segregation as used herein means that the lactase particles and the yeast cell wall derived taste modulator particles are not homogeneously or not uniformly distributed. For instance, during storage, distribution and / or handling of (batches of) granulate compositions segregation of the lactase particles and yeast cell wall derived taste modulator particles can occur and can, for example, be observed with the human eye. Segregation can for example be determined by comparing the enzymatic activity at different places in the granulate composition.

Vegetable oil may be added to reduce or avoid segregation and still obtain a granulate composition which is flowable. Preferably, the amount of vegetable oil is from 0.015 to 1 wt% or more preferably from 0.015 to 0.5 wt%. Even more preferably, the amount of vegetable oil is 0.015 to 0.4 wt% of vegetable oil, such as from 0.02 to 0.3 wt%, for instance from 0.03 to 0.25 wt% of vegetable oil, for instance from 0.04 to 0.2 wt% of vegetable oil, for instance from 0.05 to 0.1 wt% of vegetable oil, for instance from 0.04 to 0.06 wt%, or from 0.045 to 0.08 wt%, or from 0.035 to 0.07 wt% of vegetable oil. Suitable examples of a vegetable oil are sunflower oil, palm oil, soy oil and/or canola oil. Preferably, the vegetable oil is sunflower oil.

Lactase or β-galactosidase (E.C: 3.2.1.23) is an enzyme which catalyses the hydrolysis of lactose (a disaccharide) into its component monosaccharides glucose and galactose. Lactose is present in dairy products and more specifically in milk, skimmed milk, cream, yoghurt, ice-cream and other milk products.

Lactases have been described for and isolated from a large variety or organisms, including microorganisms. Lactase is often an intracellular component of micro-organisms like Kluyveromyces and Bacillus. Kluyveromyces and especially K. fragilis, K. marxianus and K. lactis, and other yeasts such as those of the genera Candida, Torula and Torulopsis are a common source of yeast lactases, whereas B. coagulans or B circulans are well known sources for bacterial lactases. All these lactases are so called neutral lactases since they have a pH optimum between pH=6 and pH=8. Several organisms such as Aspergillus niger and Aspergillus oryzae can produce extracellular lactase, and U.S. Pat. No. 5,736,374 describes an example of such lactase, produced by Aspergillus oryzae. The enzymatic properties of lactases like pH- and temperature optimum vary between species. In general, however, lactases that are excreted show a lower pH-optimum of pH=3.5 to pH=5.0 (acid lactases); intracellular lactases usually show a higher pH optimum in the region of pH=6.0 to pH=7.5 for neutral lactases, but exceptions on these general rules occur.

The lactase in the granulate composition as disclosed herein is a neutral lactase or an acidic lactase . A lactase in the herein disclosed granulate composition is preferably an intracellular produced neutral lactase in which case the neutral lactase is extracted from its host cells by methods known to the skilled person. The lactase in the granulate composition is preferably a neutral lactase. The lactase in the herein disclosed granulate composition may be a combination of different lactases.

Commercial lactase are typically formulated and sold as a liquid. Several liquid lactase products are currently on the market. Suitable commercial examples of a lactase which can be part of the herein disclosed granulate composition are Lactozym (Novozymes); Ha-Lactase (Chr. Hansen), GODO YNL-2 (DuPont-Danisco), Saphera (Novozymes), Nolafit (Chr. Hansen), and Maxilact LGX 5000 and LGi (both sold by DSM Food Specialties). Other suitable lactases have been described in the scientific literature and/or in patent publications. These commercial lactases can be converted in a powder, granulate or (micro) granulate by drying, preferably spray-drying. The glycerol present in said liquid commercial lactase preparation is preferably removed by using well known techniques before drying.

Alternatively, the lactase in the herein disclosed granulate composition is commercially available micro-granulated lactase such as Maxilact GF MG (DSM Food Specialties).

A lactase in the herein disclosed granulate composition is preferably *Kluyveromyces lactis* lactase.

The lactase activity is determined as Neutral Lactase Units (NLU) using o-nitrophenyl-β-D-galactopyranoside (ONPG) as the substrate, according to the procedure described in FCC (sixth ed, 2008, p1124-1126: Lactase (neutral) β-galactosidase activity).

Preferably, the lactase in the herein disclosed granulate composition is substantially free from invertase. More preferably, the granulate composition is substantially free from invertase.

Preferably, the lactase in the herein disclosed granulate composition is substantially free from arylsulfatase. More preferably, the granulate composition is substantially free from arylsulfatase.

Preferably, the lactase in the herein disclosed granulate composition is substantially free from invertase and arylsulfatase. More preferably, the granulate composition is substantially free from invertase and arylsulfatase.

Yeast cell wall derived taste modulator is defined herein as a taste modulator which is prepared from yeast cell walls. The preparation of a suitable yeast cell wall derived taste modulator is described in WO2017050629 and/or EP3378334 A1 which are both incorporated herein by reference.

A yeast cell wall derived taste modulator provides beneficial flavour modulating properties without providing yeasty notes. Thus, although being derived from disrupted yeast cell walls, the yeast cell wall derived taste modulator does not provide a yeast flavour or an umami flavour. Preferably, the yeast cell wall derived taste modulator comprises less than 5%, or less than 4%, or less than 3%, or less than 2% or less than 1% (w/w, on carrier free dry matter) of 5'-ribonucleotides or monosodium glutamate. Preferably, the yeast cell wall derived taste modulator does not comprise 5'-ribonucleotides and/or does not comprise monosodium glutamate. Preferably, the yeast cell wall derived taste modulator is obtainable by the methods described in WO2017050629 and/or EP3378334 A1.

In a preferred embodiment, the amount of glucans in the yeast cell wall derived taste modulator is within the range of 0.5 to 50%, more preferably within the range of 1 to 40%, even more preferably within the range of 10 to 35%, most preferably in the range of 15, 20 or 25 to 30% (w/w, on carrier free dry matter).

In a preferred embodiment, the amount of mannans in the yeast cell wall derived taste modulator is within the range of 0.5 to 40%, more preferably within the range of 1 to 30%, even more preferably within the range of 5 to 25%, most preferably in the range of 10 or 15 to 25% (w/w, on carrier free dry matter).

In a preferred embodiment, the amount of free amino acids in the yeast cell wall derived taste modulator is within the range of 0.5 to 30%, more preferably within the range of 0.5 to 25%, even more preferably within the range of 1 to 5%, most preferably within the range of 1 to 3% (w/w, on carrier free dry matter).

In a preferred embodiment, the amount of protein or protein fragments in the yeast cell wall derived taste modulator is within the range of 0.5 to 40%, more preferably within the range of 1 to 40%, more preferably within the range of 5 to 35%, most preferably within the range of 10, 15, 20 or 25 to 35% (w/w, on carrier free dry matter).

In a further preferred embodiment, the amount of phospholipids in the yeast cell wall derived taste modulator is within the range of 0.5 to 40%, more preferably 1 to 35%, even more preferably 5 to 25% more preferably 7 to 25%, or 10 to 20 %, most preferably 11 or 12 to 18% (w/w, on carrier free dry matter).

In a preferred embodiment, the yeast cell wall derived taste modulator comprises less than 10%, more preferably less than 5%, most preferably less than 1% (w/w, on carrier free dry matter) of nucleic acids.

In a preferred embodiment, the yeast cell wall derived taste modulator comprises less than 10%, more preferably less than 5%, most preferably less than 1% (w/w, on carrier free dry matter) of ribonucleotides.

In a preferred embodiment, the yeast cell wall derived taste modulator comprises less than 1%, more preferably less than 0.9%, even more preferably less than 0.8%, most preferably less than 0.5% of glucose or reducing sugar, (w/w on carrier free dry matter).

Carrier free dry matter is defined as the dry matter of the yeast cell wall derived taste modulator excluding a carrier. Carriers, known as drying aids, are generally used to make a process economically and technically viable and these additives should have a foodstuff status and contribute to increase the glass transition temperature of the mixture. Examples of such carriers are salt, maltodextrin, starch, highly branched amylopectin, cellulose and gum Arabic.

In a preferred embodiment, the yeast cell wall derived taste modulator comprises glucan fragments having a length of 0.1 to 50 kDa, preferably a length of 0.5 to 50kDa, 0.8 to 50 kDa, 3 to 50 kDa, 4 to 50 kDa or 5 to 50 kDa. More preferably a length of 0.1 to 45 kDa, 0.1 to 40 kDa, 0.1 to 35 kDa, 0.1 to 30 kDa, 0.1 to 25 kDa, 0.1 to 20 kDa, 0.1 to 15 kDa or 0.1 to 10 kDa. Even more preferably, the present glucan fragments have a length of 10 to 30 kDa.

In another preferred embodiment, the glucan fragments comprise β-1,3-glucan fragments and / or β-1,6-glucan fragments. Preferably the β-1,3-glucan fragments have a length of 0.1 to 50 kDa, preferably a length of 0.5 to 50kDa, 0.8 to 50 kDa, 3 to 50 kDa, 4 to 50 kDa or 5 to 50 kDa. More preferably a length of 0.1 to 45 kDa, 0.1 to 40 kDa, 0.1 to 35 kDa, 0.1 to 30 kDa, 0.1 to 25 kDa, 0.1 to 20 kDa, 0.1 to 15 kDa or 0.1 to 10 kDa. Even more preferably, a length of 10 to 30 kDa or 5 to 20 kDa. Preferably, the β-1,6-glucan fragments have a length of 0.1 to 50 kDa, preferably a length of 0.5 to 50kDa, 0.8 to 50 kDa, 3 to 50 kDa, 4 to 50 kDa or 5 to 50 kDa. More preferably a length of 0.1 to 45 kDa, 0.1 to 40 kDa, 0.1 to 35 kDa, 0.1 to 30 kDa, 0.1 to 25 kDa, 0.1 to 20 kDa, 0.1 to 15 kDa or 0.1 to 10 kDa. Even more preferably a length of 10 to 30 kDa.

The phospholipids are preferably selected from the group consisting of phosphatidic acids, phosphatidyl cholines, phosphatidyl ethanolamines, phosphatidyl serines, phosphatidyl glycerols, phosphatidyl inositols and mixtures thereof. Of these, phosphatidyl cholines, phosphatidyl glycerols and phosphatidic acids are particularly preferred.

A yeast cell wall derived taste modulator as used in the herein disclose granulate composition comprise glucans, mannans, protein, protein fragments and/or phospholipids. Typically said yeast cell wall derived taste modulator comprises
(i) 10 to 40% (w/w) glucans;
(ii) 5 to 30 % (w/w) mannans;
(iii) 10 to 40 % (w/w) protein; and
(iv) 5 to 25 % (w/w/) phospholipids

More preferably, said yeast cell wall derived taste modulator comprises
(i) 20 to 35% (w/w) glucans;
(ii) 12 to 22 % (w/w) mannans;
(iii) 15 to 35 % (w/w) protein; and
(iv) 5 to 18 % (w/w/) phospholipids
(v) 1 to 5 % (w/w) fatty acids
(vi) 38 to 42 % (w/w) salt

A commercially available example of a suitable yeast cell wall taste modulator is Modumax (DSM Food Specialities).

The herein disclosed granulate composition may comprise other components such as a carrier, preferably a spray dry carrier, selected from, maltodextrin, starch, highly branched amylopectin, cellulose and gum Arabic. Preferably, the carrier in the disclosed granulate composition is maltodextrin.

The herein disclosed granulate may also comprise components like vitamins or stabilizers. Vitamins and stabilizers are commercially available as powders and/or granulates and can thus be included in the herein disclosed granulate compositions. Examples of stabilizers are gellan gum, xanthan gum, welan gum or curdlan or extracts of fruit peel such as pectin from apple pomace or citrus peel or any combination of said stabilizers.

Yet another component which may be present in the herein disclosed granulate composition is a high intensity sweetener and/or artificial sweetener. Preferably the high intensity sweetener and/or artificial sweetener is chosen from the group consisting of a steviol glycoside, sucralose, acesulfame K, alitame, aspartame, cyclamate, erythritol, glycyrrhizin, neohesperidin, dihydrochalcone, neotame, saccharin, thaumatin and combinations thereof, more preferably chosen from a steviol glycoside, acesulfame k and sucralose and the combination thereof. More specifically the granulate composition as disclosed herein comprises a steviol glycoside, such as stevioside, rebaudioside A (Reb A), rebaudioside B (Reb B), rebaudioside C (Reb C), rebaudioside D (Reb D), rebaudioside E (Reb E), rebaudioside M (Reb M), rebaudioside N (Reb N) or rebaudioside O (Reb O) or a combination of any thereof. Most preferably, the steviol glycoside in the granulate composition as disclosed herein comprises rebaudioside M (Reb M).

Yet another aspect of the disclosure is a method for preparing a granulate composition as disclosed herein, said method comprising mixing
i. spray dried lactase and spray dried yeast cell wall derived taste modulator, or
ii. spray dried lactase and spray dried yeast cell wall derived taste modulator and a sweetener, preferably a steviol glycoside, or
iii. spray dried lactase and spray dried yeast cell wall derived taste modulator and Reb M.

I.e. disclosed herein is a method for preparing a granulate composition comprising a lactase and a yeast cell wall derived taste modulator, said method comprising mixing spray dried lactase and spray dried yeast cell wall derived taste modulator. Optionally, said method comprises a step of spray drying a lactase solution and/or spray drying a yeast cell wall derived taste modulator solution. Spray drying is a method of producing a dry powder or dry particle from a liquid or a slurry, which is known to a person skilled in the art. Spraying drying comprises bringing a liquid composition comprising an enzyme to a temperature of between 20 and 90°C for instance between 30 and 80°C for instance between 40 and 70 °C. Spray drying may comprising bringing the liquid composition into contact with an air flow of 110°C to 190°C, for instance from 120°C to 160°C, for instance from 125°C to 145°C. During spray drying a liquid composition comprising an enzyme, a carrier, for instance maltodextrin may be added.

Also disclosed herein is a method for preparing a granulate composition comprising a lactase and a yeast cell wall derived taste modulator and a sweetener, said method comprising mixing spray dried lactase and spray dried yeast cell wall derived taste modulator and a sweetener. Optionally, said method comprises a step of spray drying a lactase solution and/or spray drying a yeast cell wall derived taste modulator solution. Commercially available sweeteners may be available in a granulated or powdered form.

Further disclosed herein is a method for preparing a granulate composition comprising a lactase and a yeast cell wall derived taste modulator and Reb M, said method comprising mixing spray dried lactase and spray dried yeast cell wall derived taste modulator and Reb M. Optionally, said method comprises a step of spray drying a lactase solution and/or a spray drying yeast cell wall derived taste modulator solution. Commercially available Reb M can be obtained in a granulate form.

In case, said method comprises a step of spray drying of a lactase solution and/or spray drying a yeast cell wall derived taste modulator solution, the used carrier is preferably selected from salt, maltodextrin, yeast extract, starch, highly branched amylopectin, cellulose and gum Arabic. Preferably, the carrier used in the spray drying step is maltodextrin.

Another aspect as disclosed herein is a method for preparing a dairy product, said method comprising
- adding a granulate composition comprising a lactase and a yeast cell wall derived taste modulator to a lactose comprising milk-based substrate,
- allowing the lactase to at least partly hydrolyze the lactose,
or a method for preparing a dairy product, said method comprising
- adding a granulate composition comprising a lactase and a yeast cell wall derived taste modulator and a high intensity sweetener, preferably a steviol glycoside (more preferably Reb M) to a lactose comprising milk-based substrate,
- allowing the lactase to at least partly hydrolyze the lactose.

The phrases "lactose comprising milk-based substrate" and "milk-based substrate comprising lactose" are used interchangeably herein.

The term "milk" as used herein refers to the lacteal secretion obtained from any mammal, such as cows, sheep, goats, camels or buffaloes. Preferably, the milk is cow's milk.

The term "milk-based substrate" as used herein refers to any raw and/or processed milk material. The milk-based substrate may have been subjected to treatments known in the art such as - for example- homogenization, pasteurization, sterilization or an extended shelf life (ESL) treatment or an ultra-heat treatment (UHT). The term "milk substrate" as used in the present context, may be any raw and/ or processed milk material. Useful milk substrates may include solutions / suspensions of any milk or milk like products comprising lactose, such as whole or low-fat milk, skim milk, buttermilk, reconstituted milk granulate, condensed milk, solutions of dried milk, UHT milk, whey, whey permeate, acid whey or cream. Preferably the present milk substrate is milk or an aqueous solution of skim milk granulate.

The lactose comprising milk-based substrate is incubated with the granulate composition comprising a lactase and a yeast cell wall derived taste modulator such that the lactase is able to at least partly hydrolzye the lactose. The phrase "allowing the lactase to at least partly hydrolyze the lactose" as used herein refers to at least 10 %, 20 %, 30 %, 40 %, 50 %, 60 %, 70%, 80 %, 90 % or 95 % (w/v) of the lactose being hydrolysed by the lactase, preferably to glucose and galactose.

The lactase is allowed sufficient time to produce glucose and galactose. The exact time will depend on the lactase used, the amount of lactase used (dosage) but also on the used temperature and the lactose concentration in the milk-based substrate. The skilled person is capable to identify an lactase dosage, incubation temperature and incubation time to allow at least partial hydrolysis of the lactose to glucose and galactose.

As used herein, a dairy product encompasses any composition that is produced from milk, for instance casein and/or whey protein. Examples are milk, milk-derived products, fermented milk products (e.g. yoghurt), condensed milk, UHT milk, evaporated milk, granulated milk, frozen milk, ice cream, cream, butter, butter milk, whey and/or cheese. The product may also be a hydrolysate or a product obtained by fractionation of milk or whey, like caseinate, milk protein concentrate, whey protein concentrate (WPC), whey protein isolate (WPI), or (concentrated) whey permeate and products made thereof

An example of a dairy product is milk, such as skimmed milk, low fat milk, whole milk, UHT milk, extended shelf life (ESL) milk or a flavoured milk drink and hence disclosed herein is a method for preparing milk, said method comprising
- adding a granulate composition comprising a lactase and a yeast cell wall derived taste modulator to a lactose comprising milk-based substrate,
- allowing the lactase to at least partly hydrolyze the lactose.
or a method for preparing milk, said method comprising
- adding a granulate composition comprising a lactase and a yeast cell wall derived taste modulator and a high intensity sweetener, preferably a steviol glycoside (more preferably Reb M) to a lactose comprising milk-based substrate,
- allowing the lactase to at least partly hydrolyze the lactose.

The milk may be prepared via the so-called batch (pre-heat treatment) or via the post-heat treatment process.

In the pre-heat treatment process (also referred to as batch process) the (lactase) granulate composition is added to raw or thermized / pasteurized milk (as an example of a milk-based substrate) and incubated for e.g. 24 hours at refrigerated conditions, before the milk is heat treated by either pasteurization, an ESL-treatment, an UHT-treatment, or sterilization before packaging.

Alternatively, the milk (as an example of a milk-based substrate) can be treated via the post-heat treatment process (also referred to as continuous or aseptic process). Here the milk is first heat treated by any of the methods described above (i.e. pasteurization, an ESL-treatment, an UHT-treatment, or sterilization), and the lactase is only added to the milk after cooling, and before packaging. In this case the enzymatic conversion of lactose takes place during storage in the package. For this process, the granulate composition as disclosed herein is sterile.

An example of dairy product is a fermented dairy product such as yogurt and hence disclosed herein is a method for preparing a fermented dairy product, said method comprising
- adding a granulate composition comprising a lactase and a yeast cell wall derived taste modulator to a lactose comprising milk-based substrate,
- allowing the lactase to at least partly hydrolyze the lactose,
said method further comprises adding lactic acid bacteria to the milk-based substrate and allowing fermentation to take place.
or a method for preparing a dairy product, said method comprising
- adding a granulate composition comprising a lactase and a yeast cell wall derived taste modulator and a high intensity sweetener, preferably a steviol glycoside (more preferably Reb M) to a lactose comprising milk-based substrate,
   - allowing the lactase to at least partly hydrolyze the lactose
   said method further comprises adding lactic acid bacteria to the milk-based substrate and allowing fermentation to take place.

The particular characteristics of the various fermented milk products depend upon various factors, such as the composition of milk base, the incubation temperature, the lactic acid flora and/or non-lactic acid flora. Thus, fermented milk products manufactured herein include, for instance, various types of regular yoghurt, low fat yogurt, non-fat yoghurt, kefir, dahi, ymer, buttermilk, butterfat, sour cream and sour whipped cream as well as fresh cheeses such as quark and cottage cheese.

As used in the present specification, the term "yogurt" (or yoghurt; the terms are used interchangeably herein) refers to products comprising "lactic acid bacteria such as *Streptococcus salivarius thermophilus* and *Lactobacillus delbruekii* subsp. *bulgaricus,* but also, optionally, other microorganisms such as *Lactobacillus delbruekii* subsp. *lactis, Bifidobacterium animalis* subsp. *lactis, Lactococcus lactis, Lactobacillus acidophilus* and *Lactobacillus casei,* or any microorganism derived therefrom. The lactic acid strains other than *Streptococcus salivarius thermophilus* and *Lactobacillus delbruekii* subsp. *bulgaricus,* are intended to give the finished product various properties, such as the property of promoting the equilibrium of the flora.

As used herein, the term "yogurt" encompasses set yogurt, stirred yogurt, drinking yoghurt, heat treated yogurt and yogurt-like products. Preferably, the yogurt is set yogurt, stirred yogurt or drinking yogurt. More preferably, the yogurt is a stirred yogurt or set yogurt. Most preferred, the yogurt is stirred yogurt. The term "yogurt" encompasses, but is not limited to, yoghurt as defined according to French and European regulations, e.g. coagulated dairy products obtained by lactic acid fermentation by means of specific thermophilic lactic acid bacteria only (i.e. *Lactobacillus delbruekii* subsp. *bulgaricus* and *Streptococcus salivarius thermophilus*) which are cultured simultaneously and are found to be live in the final product in an amount of at least 10 million CFU (colony-forming unit) / g. Preferably, the yogurt is not heat-treated after fermentation. Yogurts may optionally contain added dairy raw materials (e.g. cream) or other ingredients such as sugar, one or more flavouring(s), fruit, cereals, or nutritional substances, especially vitamins, minerals and fibers. Such yogurt advantageously meets the specifications for fermented milks and yogurts of the AFNOR NF 04-600 standard and/or the codex StanA-Ila-1975 standard. In order to satisfy the AFNOR NF 04-600 standard, the product must not have been heated after fermentation and the dairy raw materials must represent a minimum of 70% (m/m) of the finished product.

The term "starter" or "starter culture" as used herein refers to a culture of one or more food-grade micro-organisms, in particular lactic acid bacteria, which are responsible for the acidification of the milk base. Starter cultures may be fresh (liquid), frozen or freeze-dried. Freeze dried cultures need to be regenerated before use. For the production of a fermented dairy product, the starter is usually added in an amount from 0.01 to 3%, preferably from 0.01 and 0.02 % by weight of the total amount of milk base.

As used herein, the term "lactic acid bacteria" (LAB) or "lactic bacteria" refers to food-grade bacteria producing lactic acid as the major metabolic end-product of carbohydrate fermentation. These bacteria are related by their common metabolic and physiological characteristics and are usually Gram positive, low-GC, acid tolerant, non- sporulating, non-respiring, rod-shaped bacilli or cocci. During the fermentation stage, the consumption of lactose by these bacteria causes the formation of lactic acid, reducing the pH and leading to the formation of a protein coagulum. These bacteria are thus responsible for the acidification of milk and for the texture of the dairy product. As used herein, the term "lactic acid bacteria" or "lactic bacteria" encompasses, but is not limited to, bacteria belonging to the genus of *Lactobacillus* spp., *Bifidobacterium* spp., *Streptococcus* spp., *Lactococcus* spp., such as *Lactobacillus delbruekii* subsp. *bulgaricus, Streptococcus salivarius thermophilus, Lactobacillus lactis, Bifidobacterium animalis, Lactococcus lactis, Lactobacillus casei, Lactobacillus plantarum, Lactobacillus helveticus, Lactobacillus acidophilus* and *Bifidobacterium breve.*

Preferably, said dairy product is a sugar (preferably sucrose)-reduced dairy product, preferably said dairy product does not comprise added sugar, more preferably said dairy product does not comprise sucrose.

The present inventors found that the amount of sucrose or sugar can be reduced below 10% (wt) while maintaining an acceptable fulness/body. Therefore, the present amount of sucrose or sugar, is preferably 9% (wt) or less, more preferably 8% (wt) or less, even more preferably 7% (wt) or less, more preferably 6% (wt) or less such as 5% (wt) or less, 4% (wt) or less, 3% (wt) or less or even 2% (wt) or less or 1% (wt) or less. Preferably the present sugar is sucrose.

Preferably, the lactose in the final dairy product is reduced to 0.5 (w/v)%, preferably 0.1 (w/v) % and more preferably < 0.01 (w/v)% lactose when compared to the lactose in the milk-based substrate.

Preferably, said dairy product is a low-fat dairy product, preferably said dairy product is a fat-free dairy product.

A further aspect of the disclosure is use of a granulate composition comprising a lactase and a yeast cell wall derived taste modulator for increasing the fullness/body of a dairy product or use of a granulate composition comprising a lactase and a yeast cell wall derived taste modulator and a high intensity sweetener, preferably a steviol glycoside and more preferably Reb M for increasing the fullness/body of a dairy product.

Preferably, said dairy product is a sugar (preferably sucrose)-reduced dairy product, preferably said dairy product does not comprise added sugar, more preferably said dairy product does not comprise sucrose.

The present inventors found that the amount of sucrose or sugar can be reduced below 10% (wt) while maintaining an acceptable fulness/body. Therefore, the present amount of sucrose or sugar, is preferably 9% (wt) or less, more preferably 8% (wt) or less, even more preferably 7% (wt) or less, more preferably 6% (wt) or less such as 5% (wt) or less, 4% (wt) or less, 3% (wt) or less or even 2% (wt) or less or 1% (wt) or less. Preferably the present sugar is sucrose.

Preferably, said dairy product is a low-fat dairy product, preferably said dairy product is a fat-free dairy product.

The present invention is further illustrated by the following non-limiting Examples.

## Claims

1. A granulate composition comprising a lactase and a yeast cell wall derived taste modulator.

2. A composition according to claim 1 further comprising a high intensity sweetener, preferably a steviol glycoside.

3. A composition according to claim 2, wherein said steviol glycoside is Reb M.

4. A method for preparing a granulate composition according to any one of claims 1 to 3, said method comprising mixing
i. spray dried lactase and spray dried yeast cell wall derived taste modulator, or
ii. spray dried lactase and spray dried yeast cell wall derived taste modulator and a sweetener, preferably a steviol glycoside, or
iii. spray dried lactase and spray dried yeast cell wall derived taste modulator and Reb M.

5. A method for preparing a dairy product, said method comprising
- adding a composition according to any one of claims 1 to 3 to a lactose comprising milk-based substrate,
- allowing the lactase to at least partly hydrolyze the lactose.

6. A method according to claim 5, wherein said dairy product is a fermented dairy product, said method further comprises adding lactic acid bacteria to the milk-based substrate and allowing fermentation to take place.

7. A method according to claim 5 or 6, wherein said dairy product is a sugar (preferably sucrose)-reduced dairy product, preferably said dairy product does not comprise added sugar, more preferably said dairy product does not comprise added sucrose.

8. A method according to any one of claims 5 to 7, wherein said dairy product is a low-fat dairy product, preferably said dairy product is a fat-free dairy product.

9. Use of a composition according to any one of claims 1 to 3 for increasing the fullness or body of a dairy product.

10. Use according to claim 9 wherein said dairy product is a sugar/sucrose-reduced dairy product, a sugar/sucrose-free dairy product, a low-fat dairy product or a fat-free dairy product.
